(19) Europäisches Patentamt

European Patent Office

Office européen des brevets

(11) **EP 1 199 553 B1**

(12) **EUROPEAN PATENT SPECIFICATION**

(45) Date of publication and mention
of the grant of the patent:
**22.03.2006 Bulletin 2006/12**

(51) Int Cl.:
***G01M 11/02*** (2006.01)

(21) Application number: **01122023.3**

(22) Date of filing: **13.09.2001**

(54) **A method, apparatus and memory medium for evaluating ocular optical lens**

Ein Verfahren, Apparat und Speichermedium zur Schätzung von optischen Brillengläsern

Une méthode, un appareil et médium de mémoire pour évaluer des verres optiques de lunettes

(84) Designated Contracting States:
**AT BE CH CY DE DK ES FI FR GB GR IE IT LI LU MC NL PT SE TR**

(30) Priority: **17.10.2000 JP 2000316914**

(43) Date of publication of application:
**24.04.2002 Bulletin 2002/17**

(73) Proprietor: **HOYA CORPORATION
Shinjyu-ku,
Tokyo 161-8525 (JP)**

(72) Inventors:
• **Akiyama, Hisanori
Tokyo, 161-8525 (JP)**

• **Qi, Hua
Tokyo, 161-8525 (JP)**
• **Tanaka, Norihisa
Tokyo, 161-8525 (JP)**
• **Yoda, Toshiro
Tokyo, 161-8525 (JP)**

(74) Representative: **Kuhnen & Wacker
Patent- und Rechtsanwaltsbüro
Prinz-Ludwig-Strasse 40A
85354 Freising (DE)**

(56) References cited:
**EP-A- 0 734 683        EP-A- 0 790 605
US-A- 4 606 626        US-A- 4 790 637
US-A- 6 070 980        US-A- 6 118 597**

**Description**

<u>1. Field of the Invention</u>

The present invention relates to a method for evaluating an ocular optical lens and an apparatus and a memory medium for it and, more particularly, to a method for evaluating an ocular optical lens comprising visualizing an Abbe number of an ocular optical lens and an apparatus and a memory medium for it according to claims 1, 11 and 14.

<u>2. Prior Art</u>

The properties required for a lens material of spectacle are a high refractive index, a high Abbe number, a low specific gravity, excellent workability, excellent tinting performance and chemical resistance. Among these properties, the refractive index and the Abbe number are important as the optical properties. With respect to a spectacle lens having a great dioptric power, the higher the refractive index of the lens, the smaller the thickness and, therefore, the better the appearance and the lighter the weight of the lens. The higher the Abbe number of the lens, the smaller the chromatic aberration in peripheral portions of the lens.

Since it has been difficult that a lens material having a high refractive index and a high Abbe number is developed, a spectacle lens having a higher refractive index tends to have a lower Abbe number. However, as the production technology has made progress, materials having a high refractive index and a high Abbe number and suited for the material for spectacle lenses have been developed and spectacle lenses prepared by using these materials and having excellent optical properties are becoming commercially available.

In general, a difference in the refractive index of a spectacle lens appears as a difference in the external shape, i.e., the thickness, of the lens when spectacle lenses having the same dioptric power are compared. Therefore, the difference in the refractive index can be easily understood by a person wearing spectacles. However, a difference in the Abbe number of a spectacle lens cannot be shown by a difference in the external shape and cannot be easily understood by a person wearing a spectacle. To help the person wearing spectacle glasses understand the effect of the Abbe number of the spectacle lenses, for example, an image of actual vision based on the Abbe number used for simulating retinal image is exhibited by using the Snellen's visual mark. In this image of actual vision, peripheral portions of the image are blurred with unfocussed colors and the degree of the blur depends on the Abbe number.

It is required by professional shops of spectacle glasses that, based on the difference in vision due to the difference in the Abbe number, persons wearing spectacle glasses easily understand that the lenses of spectacle worn by the persons are made of an excellent glass material. Thus, it is expected that the excellent spectacle lenses can be recognized as distinguished products different from ordinary spectacle lenses by emphasizing the excellence of the spectacle lenses. However, in the image of actual vision described above, blur with slightly unfocussed colors appearing in the Snellen's visual mark is exhibited in a manner close to that appearing in the actual retinal image and it is very difficult that the slight blur with unfocussed colors due to the difference in the Abbe number is recognized. Thus, it is heretofore difficult that an ordinary person wearing the spectacle recognizes the effect of the difference in the Abbe number from the image of actual vision unless the person is a professional person skilled in the art.

It is an object of the present invention to provide a method for evaluating an ocular optical lens which overcomes the above problems by displaying the difference in the Abbe number of an ocular optical lens as a difference in the area of a region and facilitates visually recognizing the difference in the Abbe number and an apparatus and a memory medium used for it.

According to the present invention this object is solved by the features of the claims 1, 11 and 14. Improved embodiments of the invention result from the subclaims.

As an aspect, the present invention provides a method for evaluating an ocular optical lens which comprises: inputting a value of an Abbe number expressing a degree of chromatic aberration at each point on an ocular optical lens; creating a region of comfortable vision based on the input values, the region of comfortable vision being a region in which a specific value of visual acuity is surely obtained; and evaluating a difference in visibility due to a difference in the Abbe number of the ocular optical lens based on an area of the region of comfortable vision. The area of the region of comfortable vision may be expressed as a number or understood from an area of the region displayed on a screen. In accordance with the present invention, the difference in the vision due to the difference in the Abbe number is recognized not as a retinal image but as the region of comfortable vision in which a specific value of visual acuity is surely obtained. Therefore, the difference in vision due to the difference in the Abbe number can be directly recognized.

As a further aspect, the present invention provides a method for evaluating an ocular optical lens, wherein the region of comfortable vision is displayed as an image.

As a further aspect, the present invention provides a method for evaluating an ocular optical lens, wherein the region of comfortable vision is a region marked out with and contained in a circle, an ellipse or a closed curve.

As a further aspect, the present invention provides a method for evaluating an ocular optical lens, wherein a plurality of regions of comfortable vision which are obtained from Abbe numbers of a plurality of ocular optical lenses based on different specifications are displayed on a same screen so that the plurality of regions can be compared. When a plurality of the regions of comfortable vision are exhibited in the same screen as overlapping images, the comparison can be made easily and the difference in the vision due to the difference in the Abbe number can be directly recognized.

As a further aspect, the present invention provides a method for evaluating an ocular optical lens, wherein the region of comfortable vision is displayed in a manner such that a center of the region is placed at an optical center of the ocular optical lens on a screen on which an image of a shape of a lens frame is displayed.

Moreover, the present invention provides a method for evaluating an ocular optical lens, which enables simulation of a change in the region of comfortable vision due to a change in at least one of the Abbe number, a value of visual acuity, a spherical dioptric power, a cylindrical dioptric power, an angle of cylinder axis, an additional dioptric power and values of IN/OUT and UP/DOWN of a layout of a lens shape. The additional dioptric power is a datum related to a progressive multifocal lens.

The present invention also provides a method for evaluating an ocular optical lens, wherein an image of actual vision corresponding to the region of comfortable vision is created based on the Abbe number used for creating the region of comfortable vision and the image of actual vision and the region of comfortable vision are displayed on a same screen in a manner such that the image and the region can be compared.

As a further aspect, the present invention provides a method for evaluating an ocular optical lens, wherein a Landolt's ring or a Snellen's visual mark is used for the image of actual vision.

As a further aspect, the present invention provides a method for evaluating an ocular optical lens which comprises: arbitrarily selecting a point inside a lens shape of one ocular optical lens and, based on prism characteristics at the selected point, creating an equivalent visual region in which a specific value of visual acuity is surely obtained; creating an equivalent visual region of an other ocular optical lens in accordance with a same method; and displaying the two equivalent visual regions on a same screen in a manner such that the regions can be compared. The equivalent visual region is a visual region obtained from the prism characteristics and the Abbe number at the point arbitrarily selected as described above and is different from the region of comfortable vision which was obtained in a manner such that the specific value of visual acuity is surely obtained at each point of the ocular optical lens. The arbitrarily selected point may be a single point or a plurality of points.

The present invention provides also a method for evaluating an ocular optical lens, wherein an image of actual vision at the selected point is created and the image of actual vision and the equivalent visual region are displayed on a same screen in a manner such that the image and the region can be compared.

Moreover, the present invention provides an apparatus for evaluating an ocular optical lens which comprises: input means for inputting data of an optical system including an Abbe number, a lens dioptric power and a value of visual acuity and a lens shape of the ocular optical lens; calculating means of for deriving a region of comfortable vision in which the value of visual acuity can be surely obtained based on the data input via the means of input; and display means for displaying the region of comfortable vision obtained by the means of calculation and the lens shape on a same screen in a manner such that the region and the lens shape can be compared.

As a further aspect, the present invention provides an apparatus for evaluating an ocular optical lens, wherein the region of comfortable vision is marked out with and contained in a circle whose center is placed at an optical center of the ocular optical lens and whose radius has a value h in a following range:

$$h \leqq k\nu_e / D.$$

wherein
k: a constant
$\nu_e$: an Abbe number
D: a lens dioptric power

As a further aspect, the present invention provides an apparatus for evaluating an ocular optical lens, which comprises: an apparatus for measuring an Abbe number which is used for measuring the Abbe number of the ocular optical lens; a lens meter for measuring a lens dioptric power of the ocular optical lens; a frame tracer for obtaining a shape of a lens frame; external input means for inputting data obtained by the measurements using the apparatus for measuring an Abbe number, the lens meter and the frame tracer into the calculating means; and manual input means for inputting desired data of an optical system including the Abbe number into the calculating means.

As a further aspect, the present invention provides a memory medium readable by a computer and memorizing a program for operating a computer, the program comprising: means for entering and processing data of an optical system of an ocular optical lens; means for creating a region of comfortable vision in which a specific value of visual acuity is surely obtained based on the data of an optical system; and means for displaying the obtained region of comfortable vision.

Preferred Embodiments of the Invention

The preferred embodiments of the present invention will be described in the following with reference to the drawings in which:

Fig. 1 shows a screen exhibited when the Abbe numbers treated by the apparatus for evaluation of an ocular optical lens in accordance with an embodiment of the present invention are different in a great degree;

Fig. 2 shows a screen exhibited when the Abbe numbers treated by the apparatus for evaluation of an ocular optical lens in accordance with an embodiment of the present invention are different in a medium degree;

Fig. 3 shows a screen exhibited when the Abbe numbers treated by the apparatus for evaluation of an ocular optical lens in accordance with an embodiment of the present invention are different in a small degree;

Fig. 4 shows a block diagram describing the apparatus for evaluation of an ocular optical lens of an embodiment of the present invention;

Fig. 5 shows a diagram describing the steps of simulation of an ocular optical lens of an embodiment of the present invention; and

Fig. 6 shows a diagram describing the angle of deviation of a ray by a prism having an angle of **i**.

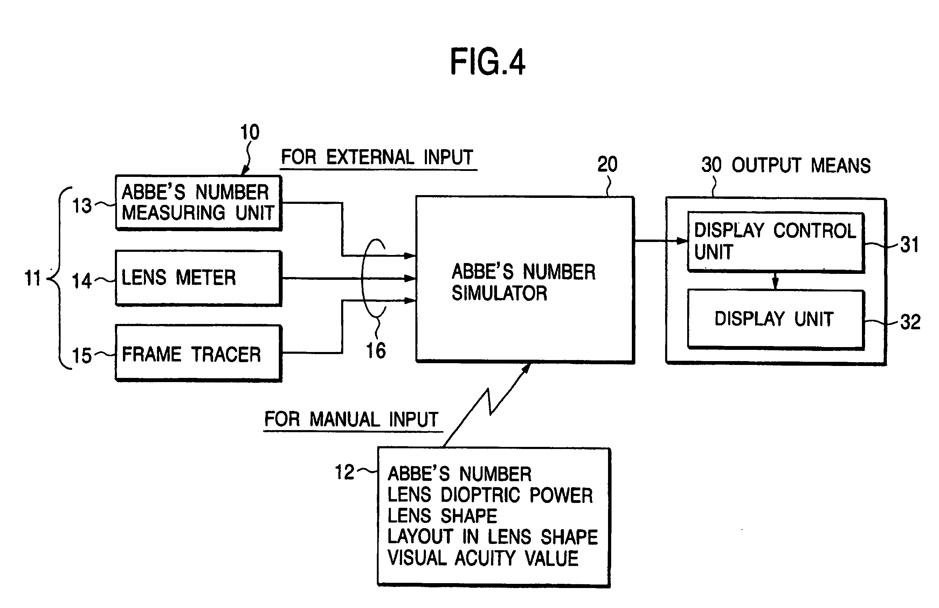

Fig. 4 shows a block diagram describing an apparatus for evaluating a spectacle lens which is an ocular optical lens. The apparatus is constituted with input means 10 for inputting data of the optical system of a spectacle lens for creating the region of comfortable vision in which a specific value of visual acuity is surely obtained, such as an Abbe number; an Abbe number simulator 20 for obtaining the region of comfortable vision of the spectacle lens based on the data of the optical system, such as the Abbe number; and output means 30 for outputting the region of comfortable vision obtained by the Abbe number simulator. The region of comfortable vision is a region marked out on the spectacle lens in a manner such that the specific value of visual acuity can be surely obtained within the region and is mainly determined by the Abbe number.
The Abbe number simulator is designed in a manner such that data for the region of comfortable vision and data for the image of actual vision can be output based on the data of the optical system such as the Abbe number using a simulation program which will be described later. The image of actual vision is an image simulating a retinal image and is already disclosed (for example, Japanese Patent Application Laid-Open No. Heisei 8(1996)-266472). The Abbe number simulator 20 can be constituted with a personal computer.
The input means 10 comprises two input lines. One of the input lines is an external input means 11 and the other is a manual input means 12. Any of the input lines can be selected for the input. The external input means 11 is a means for entering outputs from an apparatus for measuring the Abbe number 13, a lens meter 14 and a frame tracer 15 into the Abbe number simulator 20. External data can be entered into the Abbe number simulator 20 from these external input means 11 via a communication cable such as an RS232C cable.
The manual input means 12 is constituted by an apparatus such as a keyboard, a mouse, a trackball, a trackpad, an apparatus for pen input and a pointing device. Data such as the Abbe number, the dioptric power and the shape of a spectacle lens can be manually input into the Abbe number simulator using the above means.
The output means is constituted by an apparatus for controlling a display 31 and a display apparatus 32 controlled by the apparatus for controlling display 31 such as a CRT, a liquid crystal display, a printer and a plotter. The region of comfortable vision can be displayed based on the data of the region of comfortable vision output from the Abbe number simulator 20.
Among the apparatuses connected to the Abbe number simulator 20, the apparatus for measuring the Abbe number 13 derives the Abbe number which is the reverse of a dispersive power. When the e-ray is used as the reference, the Abbe number $\nu_e$ can be obtained in accordance with the following equation:

$$\nu_e = (n_e - 1)/(n_{F'} - n_{C'}) \qquad (1)$$

In the above equation, $\nu_e$ represents the refractive index of a medium with respect to the e-ray (Hg), $n_{F'}$ represents the refractive index of the medium with respect to the F'-ray (Cd) and $n_{C'}$ represents the refractive index of the medium with respect to the C'-ray (Cd).

The lens meter 14 automatically measures the data of the optical system such as the spherical dioptric power, the cylindrical dioptric power, the angle of the cylindrical axis and the additional dioptric power of a spectacle lens inserted into the optical system for the measurement and outputs the data to the outside.

The frame tracer 15 traces the outline of the held spectacle frame, and automatically derives the data of the lens shape and outputs the data to the outside.

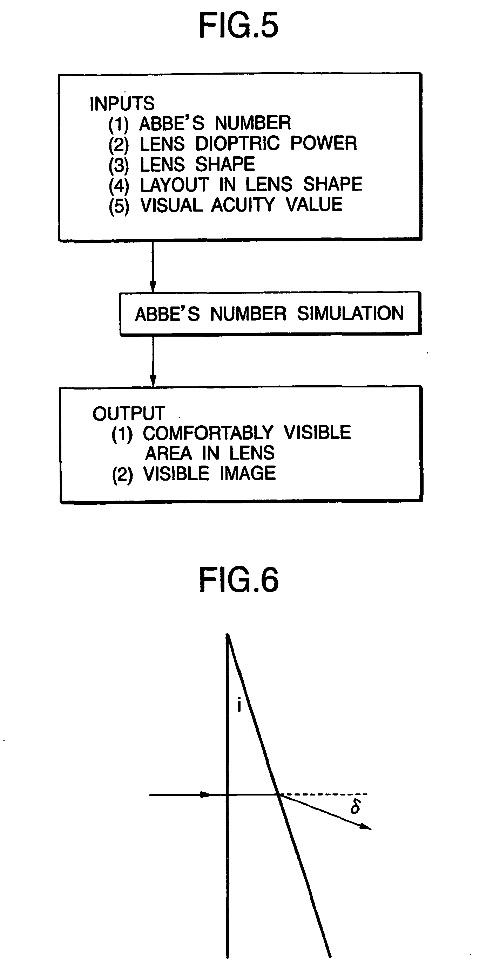

In the apparatus for evaluating an ocular optical lens described above and shown in Fig. 5, the data of the optical system and the lens shape shown in the following (i) to (v) are successively entered into the Abbe number simulator 20 from the input means 10 and the simulation is conducted.

(i) Abbe number ($\nu_e$)
$\nu_e$ represents the Abbe number with respect to the e-ray.

(ii) Lens dioptric power (S, C, Ax, Px, Py and ADD)
S represents the spherical dioptric power, C represents the cylindrical power, Ax represents the angle of the cylindrical axis, Px represents the prism dioptric power in the vertical direction and ADD represents the additional dioptric power.

(iii) Lens shape
The lens shape provides the data for the outline of the spectacle frame.

(iv) Layout of lens shape (IN/OUT and UP/DOWN)
The layout of the lens shape is the displacement between the geometrical center and the optical center of the lens shape. IN/OUT represents the displacement in the direction of the X-axis. UP/DOWN represents the displacement in the direction of the Y-axis.

(v) Value of vision acuity
The value of vision acuity indicates the condition of vision. In the use of spectacle lenses, it is recommended that a vision acuity of 0.7 or greater is obtained.

The Abbe number simulator 20 externally takes various data of the optical system from the apparatus for measuring the Abbe number 13, the lens meter 14 and the frame tracer 15 described above via communication cables 16. The data can be modified on the screen of a display operated by a simulation program which will be described later. For the manual input, the data of the optical system are entered into the Abbe number simulator 20 via a manual input means such as a keyboard 12.

The Abbe number simulator 20 performs the operation of simulation which will be described later and (i) data of the region of comfortable vision on the lens and (ii) data of the image of actual vision are obtained.

The data obtained as indicated above are transferred to the output means 30 from the Abbe number simulator 20. The apparatus for controlling the display 31 which is a part of the output means 30 displays (i) the region of comfortable vision on the lens and (ii) the image of actual vision on the screen of the display apparatus 32. The image of actual vision displayed on the screen of the display apparatus 32 is an image containing the effect of the chromatic aberration actually formed. The region of comfortable vision is an image created in a manner such that the center of the image is placed at the optical center. The image of actual vision is a retinal image obtained as follows: using data of the optical system at a plurality of wavelengths which are set in advance, monochromatic retinal images at the plurality of wavelengths are formed from data of an original image and then the retinal image is synthesized from the obtained monochromatic retinal images. The image of actual vision is already known. The method for obtaining the region of comfortable vision will be described in the following.

The Abbe number and the chromatic aberration used in the calculation by the Abbe number simulator 20 will be described in the following.

A. Abbe number and chromatic difference in the angle of deviation

To calculate the refractive index $n(\lambda)$ at an arbitrary wavelength $\lambda$ from the refractive index $n_e$ with respect to the e-ray and the Abbe number $\nu_e$, the following equation (2):

$$n(\lambda) = 1 + (n_e - 1)\{1 + B(\lambda) + A(\lambda)/\nu_e\} \qquad \qquad (2)$$

is used.

In the above equation,

$$A(\lambda) = -1.4955487241077 + 0.0885672084113\lambda^2$$
$$+ 0.3649396625563/(\lambda^2 - 0.035) + 0.0057200161544/(\lambda^2 - 0.035)^2$$
$$B(\lambda) = 0.0008271206802 - 0.0070364882344\lambda^2$$
$$+ 0.0011576188189/(\lambda^2 - 0.035) - 0.0002166266192(\lambda^2 - 0.035)^2$$

$$(3)$$

Since the Abbe number is defined as:

$$\nu_e = (n_e - 1)/(n_{F'} - n_{C'}) \qquad \qquad (4)$$

the following relations hold:

$$B(F') = B(C'), \ A(F') - A(C') = 1 \qquad \qquad (5)$$

The angle of deviation of a ray by the prism having the angle of i shown in Fig. 6 is:

$$\delta(\lambda) = \{n(\lambda) - 1\}i$$
$$= (n_e - 1)i\{1 + B(\lambda) + A(\lambda)/\nu_e\}$$
$$= (P/100)\{1 + B(\lambda) + A(\lambda)/\nu_e\} \qquad \qquad (6)$$

The difference in the angle of deviation between the F'-ray and the C'-ray is expressed as:

$$\Delta\delta = \delta(F') - \delta(C')$$
$$= (P/100)[B(F') - B(C') + \{A(F') - A(C')\}/\nu_e]$$
$$= (0.01P)/\nu_e \qquad \qquad (7)$$

B. Chromatic difference in angle of deviation and visual acuity

When the chromatic difference in the angle of deviation $\Delta\delta$ derived in accordance with the equation (7) increases, blur in the color increases and the visual acuity decreases. The empirical equation describing the relation between the chromatic difference in the angle of deviation $\Delta\delta$ and the value of visual acuity Va is as follows:

$$\mathrm{Va} = 0.001389/\Delta\delta = 0.1389\nu_e/\mathrm{P} \qquad (8)$$

wherein P: the prism diopter.

For example, to obtain a value of visual acuity of 0.7 or greater, the prism diopter P which is the unit used for expressing the ability of the prism in the direction of polarized light is in the range of:

$$\mathrm{P} \leqq 0.1389\nu_e/0.7 = 0.19844\nu_e \qquad (9)$$

When the lens dioptric power D is decided, the following relation is obtained:

$$\mathrm{D}\,\mathrm{h}/10 \leqq 0.19844\nu_e \qquad (10)$$

In the above equation, h represents the radius of the circle of the region of comfortable vision in which a value of visual acuity of 0.7 or greater can be surely obtained. Therefore, the radius h of the circle placed within the range of the lens shape and having the center placed at the optical center is:

$$\mathrm{h} \leqq 1.9844\,\nu_e\,/\,\mathrm{D}. \qquad (11)$$

When specific values are input into the above equation, the following results can be obtained.

When D=-6, the radius of the region of the lens in which a value of visual acuity of 0.7 or greater can be surely obtained is as follows:

| | | | |
|---|---|---|---|
| When $\nu_e = 58$, | 19.2 mm | or | $\phi$ 38.4 |
| When $\nu_e = 42$, | 13.9 mm | or | $\phi$ 27.8 |
| When $\nu_e = 38$, | 12.6 mm | or | $\phi$ 25.2 |
| When $\nu_e = 31$, | 10.2 mm | or | $\phi$ 20.4 |

The above simulation program used by the Abbe number simulator 20 is memorized in a medium. As the medium for memorizing the program, for example, a flexible disk, a CD-ROM or a memory card can be used. The program memorized in the medium is installed into a memory apparatus disposed in the Abbe number simulator 20 such as a hard disk apparatus. By running the program, the decrease in the visibility due to the chromatic aberration is calculated at each point on a spectacle lens. The region of comfortable vision is obtained based on the result. The difference in the visibility due to the difference in the Abbe number of the spectacle lens is evaluated based on the area of the region of comfortable vision. The program contributes to the construction of the above apparatus for evaluation of an ocular optical lens in the manner described above.

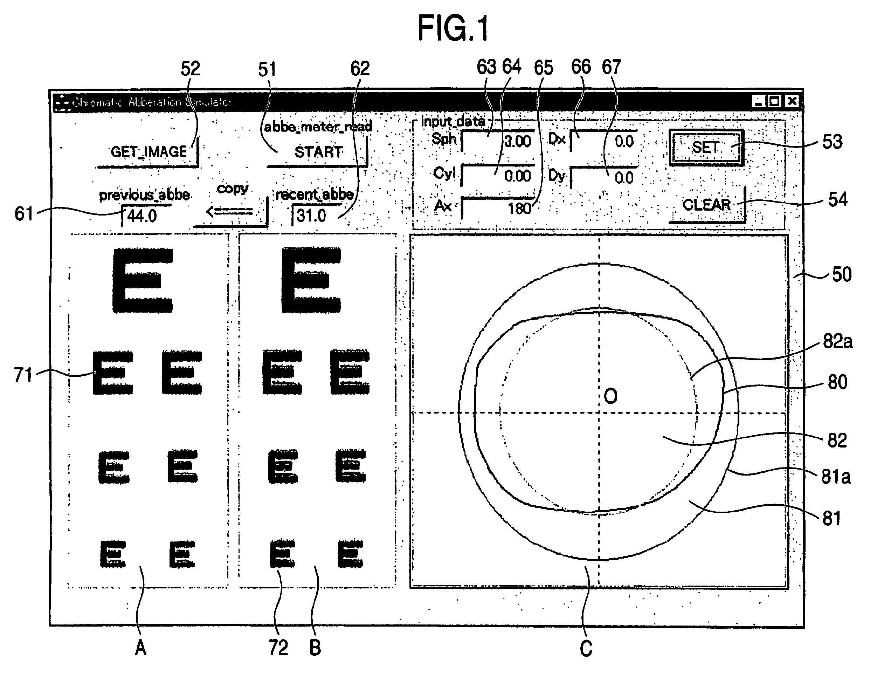

Fig. 1 shows an example of the region of comfortable vision displayed on the screen of a display apparatus based on output data from the Abbe number simulator 20. Two regions of comfortable vision corresponding to two different Abbe numbers are displayed and compared on a single screen. This shows just an example and the display can be changed in various manners.

As shown in Fig. 1, a START button 51 is shown on the screen 50. When this button is clicked, the Abbe number simulator is connected to the apparatus for measuring the Abbe number 13, the lens meter 14 and the frame tracer 15. The data of the optical system of a spectacle lens are entered into the Abbe number simulator via these apparatuses and the entered data are displayed on the data display windows 61 to 67.

In the Previous_Abbe window 61, the Abbe number before change is displayed for comparison with the Abbe number after change. In the Recent_Abbe window 62, the Abbe number after change is displayed.

In the Sph window 63, the spherical dioptric power is displayed. In the Cyl window 64, the cylindrical dioptric power is displayed. In the Ax window 65, the angle of cylindrical axis is displayed. In the Dx window 66, the X value of the prism characteristics is displayed. In Dy window 67, the Y value of the prism characteristics is displayed. In the example shown in Fig. 1, the value in the Cyl window is zero and astigmatism is absent. The values in the Dx window 66 and the Dy window 67 are both zero and the spectacle lens has no correction in the values of the prism characteristics. The Abbe numbers which are compared are 44.0 and 31.0 and the difference in the Abbe number is relatively great, i.e., 13.0.

To fix the data entered into the Abbe number simulator 20 and displayed in the windows 61 to 67, a SET button 53 is clicked. To clear these data, a CLEAR button 54 is clicked. When the data are manually input, the data are input directly into the data display windows 61 to 67 without clicking the START button 51 and then the SET button 53 is clicked.

When the data are fixed, the calculation of simulation is conducted based on the Abbe number set at first. In this case, the value of visual acuity was set at 0.7. Based on the result of the calculation, the Snellen's E marks which are images of actual vision 72 are displayed with blur in the outlines in the right portion B of the left area of the screen. The images of actual vision 72 are retinal images synthesized from images of the F-ray, the e-ray and the C-ray. As shown in the figure, the positions of the retinal images of the F-ray (blue), the e-ray (yellowish green) and the C-ray (red) are displaced from each other. The displacement between the colors depends on the Abbe number. Therefore, when spectacle lenses having different Abbe numbers are used, the displacement between colors due to the chromatic aberration becomes different.

In correspondence to the image of actual vision 72 described above, the region of comfortable vision 82 obtained by the Abbe number simulator is displayed in the right area of the screen as the area of the region marked out with and contained in a circle, an ellipse or a closed curve whose center is placed at the optical center O of an image of a shape of a spectacle frame 80. In other words, the Abbe number is recognized not as blur or density but as the area of the region marked out with and contained in the circle, the ellipse or the closed curve whose center is at the optical center O. The closed curve corresponds to the case in which the spectacle lens is constituted with a progressive multifocal lens.

It is also possible that at least one of the Abbe number, the value of visual acuity, the spherical dioptric power, the cylindrical dioptric power, the angle of cylindrical axis, the additional dioptric power and the values of IN/OUT and UP/DOWN of the region of comfortable vision 82 on the spectacle lens for the person wearing the spectacle lens, which are displayed in the right area of the screen, is changed and the change in the region 82 due to the above change is simulated. It is also possible that desired values of the Abbe number, the value of visual acuity, the spherical dioptric power, the cylindrical dioptric power, the angle of cylindrical axis, the additional dioptric power and the values of IN/OUT and UP/DOWN are entered.

As described above, regions of comfortable vision 82 based on various data can be displayed. It is possible that a region of comfortable vision 81 based on a specific Abbe number is memorized as the reference and this region as the reference and a region of comfortable vision 82 based on another Abbe number set afterwards are displayed on the same screen and compared with each other. When a single region of comfortable vision is displayed, the evaluation of the performance of a spectacle lens can be made easily. When a plurality of regions of comfortable visions are displayed and compared, a more excellent spectacle lens can be found easily among spectacle lenses which are based on different specifications. When the GET_IMAGE button 52 is clicked, the Abbe number and the image of actual vision of the Snelen's E mark 72 which are displayed on the right portion B of the left area are saved and transferred to the left portion A of the left area of the screen. The region of comfortable vision 81 remains in the right area 81. When the GET_IMAGE button 52 is not clicked, the data in the Recent_Abbe window 61, the image of actual vision 72 and the image of the region of comfortable vision 82 are overwritten by new data and a new image and updated every time the new data are set.

When the image of actual vision 71 based on the Abbe number displayed on the Previous_Abbe window 61 is saved and then a new Abbe number is set in the Recent_Abbe window 62, an image of actual vision 72 based on the new Abbe number is displayed in the right portion B of the left area of the screen. In the right area C of the screen, a Recent region of comfortable vision 82 is displayed as an image overlapping the Previous region of comfortable vision 81. Therefore, the images of actual vision 71 and 72 based on the above Abbe numbers are displayed simultaneously with the regions of comfortable vision 81 and 82. The displayed image of actual vision 72 is transferred from the present portion B to the adjacent portion A for comparison and a plurality of images of actual vision are displayed in this portion so that the images of actual vision can be compared also with the image of actual vision 72 which will be displayed afterwards.

The regions of comfortable vision 81 and 82 are displayed in the region surrounded by the image of the shape of the spectacle frame 80 as two concentric circles 81a and 82a corresponding to two different Abbe numbers. The centers of the concentric circles 81a and 82a are placed at the center of the spectacle frame in the examples shown in Fig. 1 for convenience. However, the center of the concentric circles is actually placed at the optical center. The difference between the two images of actual vision 71 and 72 which are based on different Abbe numbers and displayed in the portions A and B of the left area of the screen cannot be visually recognized. In contrast, the difference between the two regions of comfortable vision 81 and 82 which are based on different Abbe numbers and displayed in the right area of the screen is expressed as the difference in the area of the region and can be easily recognized. In the figure, the two concentric circles 81a and 82a are shown by using a full line and a broken line, respectively, for convenience. It is preferable in the actual operation that the two circles are distinguished from each other by using different colors. For example, when the Previous_Abbe window 61 and the Recent_Abbe window 62 have red color and blue color, respectively, and the two circles 81a and 82a have red color and blue color, respectively, in correspondence to the colors of the windows, the comparison can be understood easily and the difference in the visibility depending on the difference in the Abbe number of the spectacle lens can be evaluated or understood easily.

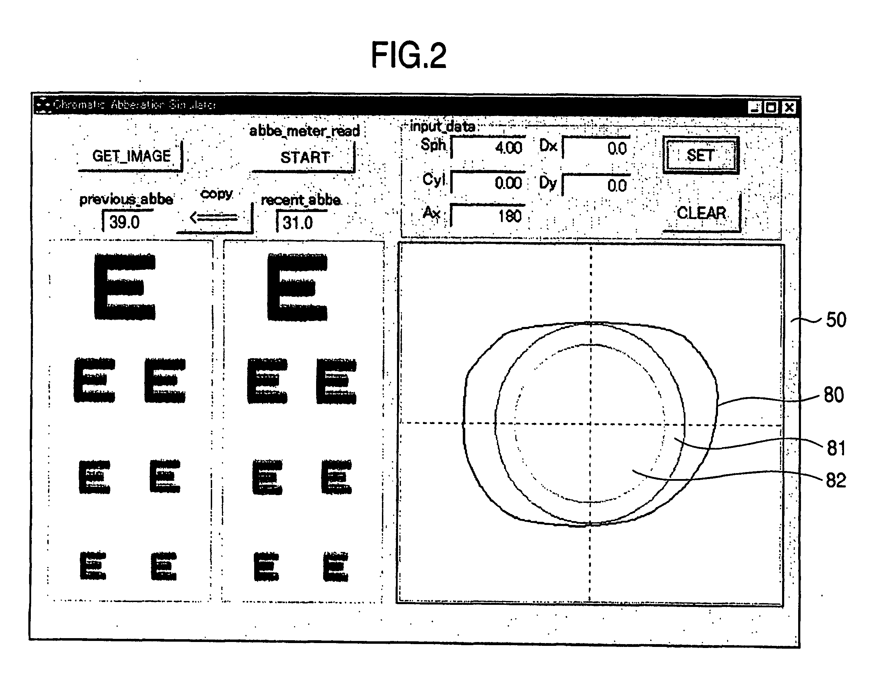

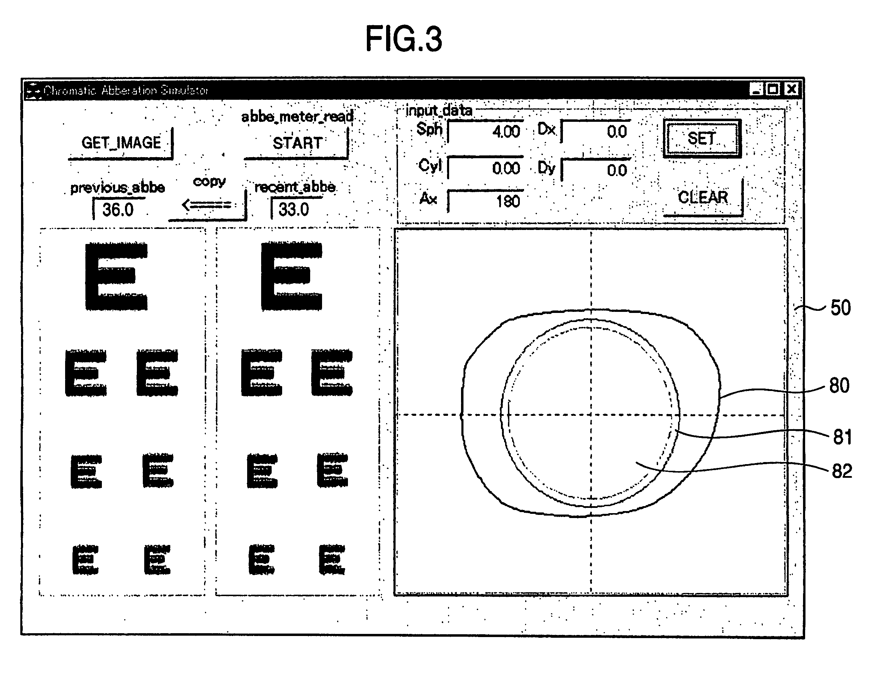

In Fig. 1 described above, spectacle lenses having Abbe numbers relatively greatly different from each other are compared. In Fig. 2, spectacle lenses having Abbe numbers closer to each other, i.e., 39.0 and 31.0, the difference being 8.0, are compared. In Fig. 3, spectacle lenses having Abbe numbers further closer to each other, i.e., 36.0 and 33.0, the difference being 3.0, are compared. As shown in the displays of these figures, by displaying the region of comfortable vision in which a specific visual acuity is surely obtained, which is based on the Abbe number, as the area of a circle, an ellipse or a closed curve as shown in the embodiments of the present invention, clear visual display of the difference in the vision due to the difference in the Abbe number is successfully achieved even when the difference in the Abbe number is small.

As described above, in accordance with the embodiments of the present invention, the difference in the vision of an image due to the difference in the Abbe number is displayed not by the simulation of a retinal image containing chromatic aberration in the actual use of a spectacle lens but by the simulation expressed as the area of the region of comfortable vision in which the specific visual acuity is surely obtained within the image of the shape of the spectacle frame. Therefore, the difference in the Abbe number can be directly and clearly recognized visually from the difference in the area of the region. As a result, the difference in the Abbe number of spectacle lenses can easily be understood by a person wearing the spectacle lens and the difference in the performance of the spectacle lens can be recognized easily. Moreover, since the regions of comfortable vision before and after a change in the data of an optical system of a spectacle lens such as the Abbe number can be displayed as overlapping images on the same screen, the difference in the vision due to the difference in the Abbe number can be easily examined based on the comparison. As a result, the Abbe number which is not easily understood by a person wearing the spectacle lens heretofore can be understood more easily.

Since the center of the circle, the ellipse or the closed curve forming the outline of the region of comfortable vision is placed at the optical center of the spectacle lens, not only the area of the region of comfortable vision but also the range of the region in which the specific value of visual acuity is surely obtained in the spectacle lens can be easily understood. It has been difficult that the difference in the Abbe number between spectacle lenses based on different specifications is understood by a person wearing the spectacle lens. In accordance with the present invention, this difference can be clearly shown and demonstrated and the difference in the performance can be easily recognized.

In the embodiments of the present invention described above, the region of comfortable vision in which a specific value of visual acuity can be surely obtained is created for one spectacle lens based on the Abbe number at each point of the spectacle lens. Then, the region of comfortable vision corresponding to the above value of visual acuity is created for another spectacle lens and the two regions are displayed in the same screen and compared. In another manner, a point may be selected arbitrarily inside the lens shape. Based on the prism characteristics of the selected point, a visual region may be created for one spectacle lens so that a specific value of visual acuity can be surely obtained at the selected point. Thereafter, an equivalent visual region of another spectacle lens corresponding to the value of visual acuity may be created and the two visual regions are displayed in the same screen and compared. In the case, it is preferable that an image of actual vision at the selected point is created and the image of actual vision is displayed in the same screen so that the image can be compared with the equivalent visual region.

In the results of simulation described above, the lateral chromatic aberration in magnification alone is considered and the spherical aberration, the coma aberration and the astigmatism are not considered for convenience. The lateral chromatic aberration in magnification is obtained not in accordance with a rigorous method of ray tracing but in accordance with an approximate equation assuming that the angle of deviation of a ray is proportional to the prism diopter. For the practical purpose, the above approximate method is sufficient since the object of facilitating the understanding of a person wearing a spectacle lens can be achieved. However, it is also possible that a highly accurate simulation is conducted by considering data of the optical system which are not considered above.

In the above embodiments, the optical system is constructed by using a spectacle lens as the optical lens. The method can be used for selection of a contact lens or an in-eye lens when the optical system is constructed by using a contact lens or an in-eye lens, respectively, as the optical lens and an image is obtained by simulation based on the optical system. It is also possible that a scenery image of a Landolt's ring is used for the above image of vision in place of the Snellen's E marks. Of course, the layout of the display is not limited to those shown in the embodiments and can be changed in various manners as long as the object of the present invention is not adversely affected. The number of images simultaneously shown on the screen is not limited to one or two but may be three or more.

Effect of Invention

In accordance with the present invention, since the difference of vision due to the difference in the Abbe number is expressed as the area of the region of comfortable vision in which a specific value of visual acuity can be surely obtained, the Abbe number or the difference in the Abbe number which has been difficult to understand easily can be easily understood.

**Claims**

1.   A method of visualizing an Abbe number of an ocular optical lens, which comprises:

   inputting a value of an Abbe number expressing a degree of chromatic aberration at each point on an ocular optical lens;
   displaying a region of comfortable vision based on the input values, the region of comfortable vision being a region in which a specific value of visual acuity is surely obtained; and
   visualizing the effect of a difference in the Abbe number of the ocular optical lens based on an area of the region of comfortable vision.

2.   The method according to claim 1, wherein the region of comfortable vision is displayed as an image.

3.   The method according to claims 1 or 2, wherein the region of comfortable vision is a region marked out with and contained in a circle, an ellipse or a closed curve.

4.   The method according to any one of claims 1 to 3, wherein a plurality of regions of comfortable vision which are obtained from Abbe numbers of a plurality of ocular optical lenses based on different specifications are displayed on a same screen so that the plurality of regions can be compared.

5.   The method according to any one of claims 1 to 4, wherein the region of comfortable vision is displayed in a manner such that a center of the region is placed at an optical center of the ocular optical lens on a screen on which an image of a shape of a lens frame is displayed.

6.   The method according to any one of claims 1 to 5, which enables simulation of a change in the region of comfortable vision due to a change in at least one of the Abbe number, a value of visual acuity, a spherical dioptric power, a cylindrical dioptric power, an angle of cylinder axis, an additional dioptric power and values of IN/OUT and UP/DOWN of a layout of a lens shape.

7.   The method according to any one of claims I to 6, wherein an image of actual vision corresponding to the region of comfortable vision is created based on the Abbe number used for obtaining the region of comfortable vision and the image of actual vision and the region of comfortable vision are displayed on a same screen in a manner such that the image and the region can be compared.

8.   The method according to any one of claims 1 to 7, wherein a Landolt's ring or a Snellen's visual mark is used for the image of actual vision.

9.   A method of visualizing an Abbe number of an ocular optical lens, which comprises:

   arbitrarily selecting a point inside a lens shape of one ocular optical lens and, based on prism characteristics at the selected point, creating an equivalent visual region in which a specific value of visual acuity is surely obtained;
   creating an equivalent visual region of an other ocular optical lens in accordance with a same method; and

displaying the two equivalent visual regions on a same screen in a manner such that the regions can be compared.

10. The method according to claim 9, wherein an image of actual vision at the selected point is created and the image of actual vision and the equivalent visual region are displayed on a same screen in a manner such that the image and the region can be compared.

11. An apparatus for visualizing an Abbe number of an ocular optical lens, which comprises:

input means for inputting data of an optical system including an Abbe number, a lens dioptric power and a value of visual acuity and a lens shape of the ocular optical lens;
calculating means for deriving a region of comfortable vision in which the value of visual acuity can be surely obtained based on the data input via the input means; and
display means for displaying the region of comfortable vision obtained by the calculating means and the lens shape on a same screen in a manner such that the region and the lens shape can be compared.

12. The apparatus according to claim 11, wherein the region of comfortable vision is marked out with and contained in a circle whose center is placed at an optical center of the ocular optical lens and whose radius has a value h in a following range:

$$h \leq k\nu_e/|D|$$

wherein
k: a constant
$\nu_e$: an Abbe number
D: a lens dioptric power.

13. The apparatus according to claims 11 or 12, which comprises:

an apparatus for measuring an Abbe number which is used for measuring the Abbe number of the ocular optical lens;
a lens meter for measuring a lens dioptric power of the ocular optical lens;
a frame tracer for obtaining a shape of a lens frame;
external input means for inputting data obtained by the measurements using the apparatus for measuring an Abbe number, the lens meter and the frame tracer into the calculating means; and
manual input means for inputting desired data of an optical system including the Abbe number into the calculating means.

14. A memory medium readable by a computer and memorizing a program for operating a computer, the program comprising:

means for entering and processing data of an optical system , comprising a valve of an Abbe number, ofan ocular optical lens;
means for creating a region of comfortable vision in which a specific value of visual acuity is surely obtained based on the data of an optical system; and
display means for displaying the obtained region of comfortable vision.

**Patentansprüche**

1. Verfahren zum Visualisieren der Abbe-Zahl einer optischen okularen Linse, welches folgendes umfasst:

Eingeben eines Werts für die Abbe-Zahl, die den Grad der chromatischen Aberration an jedem Punkt einer optischen okularen Linse ausdrückt;
Anzeigen einer Region des angenehmen Sehens aufgrund der eingegebenen Werte, wobei die Region des angenehmen Sehens eine Region ist, in der ein bestimmter Sehschärfewert sicher erhalten werden kann; und
Visualisieren der Wirkung einer Differenz der Abbe-Zahl der okularen optischen Linse aufgrund des Bereichs der Region des angenehmen Sehens.

2.  Verfahren nach Anspruch 1, wobei die Region des angenehmen Sehens als Bild dargestellt wird.

3.  Verfahren nach einem der Ansprüche 1 oder 2, wobei die Region des angenehmen Sehens eine Region ist, die mit einem Kreis, einer Ellipse oder einer geschlossenen Kurve markiert und in diesem bzw. dieser enthalten ist.

4.  Verfahren nach einem der Ansprüche 1 bis 3, wobei eine Vielzahl von Regionen des angenehmen Sehens, die anhand der Abbe-Zahlen einer Vielzahl von okularen optischen Linsen aufgrund von unterschiedlichen Spezifikationen erhalten wurden, auf solche Weise auf einem Bildschirm dargestellt werden, dass die vielen Regionen verglichen werden können.

5.  Verfahren nach einem der Ansprüche 1 bis 4, wobei die Region des angenehmen Sehens auf solche Weise dargestellt wird, dass die Mitte der Region auf einem Bildschirm, auf dem ein Bild der Form eines Linsenrahmens dargestellt ist, im optischen Zentrum der okularen optischen Linse dargestellt wird.

6.  Verfahren nach einem der Ansprüche 1 bis 5, das die Simulation einer Änderung der Region des angenehmen Sehens aufgrund der Änderung der Abbe-Zahl und/oder des Sehschärfewerts und/oder der sphärischen Brechkraft und/oder der zylindrischen Brechkraft und/oder des Winkels der Zylinderachse und/oder einer zusätzlichen Brechkraft und/oder der IN/OUT- und UP/DOWN-Werte des Designs einer Linsenform ermöglicht.

7.  Verfahren nach einem der Ansprüche 1 bis 6, wobei ein Bild des aktuellen Sehens, das der Region des angenehmen Sehens entspricht, aufgrund der Abbe-Zahl, die zum Erhalt der Region des angenehmen Sehens verwendet wurde, erzeugt wird, und das Bild des aktuellen Sehens und die Region des angenehmen Sehens auf solche Weise auf dem gleichen Bildschirm dargestellt werden, dass das Bild und die Region miteinander verglichen werden können.

8.  Verfahren nach einem der Ansprüche 1 bis 7, wobei ein Landolt-Ring oder eine visuelle Snellen-Markierung für das Bild des aktuellen Sehens verwendet wird.

9.  Verfahren zum Visualisieren der Abbe-Zahl einer optischen okularen Linse, welches folgendes umfasst:

    Auswählen eines beliebigen Punkts innerhalb der Linsenform einer okularen optischen Linse und Erzeugen einer äquivalenten visuellen Region, in der ein spezifischer Sehschärfewert sicher erhalten wird, aufgrund von Prismeneigenschaften am ausgewählten Punkt,
    Erzeugen der äquivalenten visuellen Region einer anderen okularen optischen Linse gemäß demselben Verfahren; und
    Anzeigen der beiden äquivalenten visuellen Regionen auf dem gleichen Bildschirm auf solche Weise, dass die Regionen verglichen werden können.

10. Verfahren nach Anspruch 9, wobei ein Bild des aktuellen Sehens am ausgewählten Punkt erzeugt wird, und das Bild des aktuellen Sehens und die äquivalente visuelle Region auf dem gleichen Bildschirm auf solche Weise angezeigt werden, dass das Bild und die Region verglichen werden können.

11. Vorrichtung zum Visualisieren der Abbe-Zahl einer optischen okularen Linse, welches folgendes umfasst:

    ein Eingabemittel zum Eingeben von Daten eines optischen Systems, die eine Abbe-Zahl, eine Linsenbrechkraft und einen Sehschärfewert und die Linsenform der okularen optischen Linse einschließen;
    ein Rechenmittel zum Ableiten einer Region des angenehmen Sehens, in dem der Wert für die Sehschärfe sicher aufgrund der vom Eingabemittel eingegebenen Daten erhalten werden kann, und
    ein Anzeigemittel zum Anzeigen der Region des angenehmen Sehens, die durch das Rechenmittel erhalten wurde, und der Linsenform auf dem gleichen Bildschirm, so dass die Region und die Linsenform verglichen werden können.

12. Vorrichtung nach Anspruch 11, wobei die Region des angenehmen Sehens von einem Kreis markiert und in diesem enthalten ist, wobei dessen Mitte im optischen Zentrum der optischen okularen Linse angeordnet ist und dessen Radius einen h-Wert im folgenden Bereich aufweist:

$$h \leq k\nu_e/|D|,$$

wobei

k : eine Konstante

$\nu_e$ : eine Abbe-Zahl

D : eine Linsenbrechkraft.

**13.** Vorrichtung nach Anspruch 11 oder 12, die folgendes aufweist:

einen Apparat zum Messen der Abbe-Zahl, der verwendet wird, um die Abbe-Zahl der okularen optischen Linse zu messen;

einen Linsenmesser zum Messen der Linsenbrechkraft der okularen optischen Linse;

ein Rahmenfühler zum Erhalten der Form eines Linsenrahmens;

en externes Eingabemittel zum Eingeben von Daten, die durch die Messungen unter Verwendung des Apparats zum Messen der Abbe-Zahl, des Linsenmessers und des Rahmenfühlers erhalten wurden, in das Rechenmittel; und

ein manuelles Eingabemittel zum Eingeben von gewünschten Daten über ein optisches System, einschließlich der Abbe-Zahl, in das Rechenmittel.

**14.** Speichermedium, das von einem Computer gelesen werden kann und in dem ein Programm zum Ausführen eines Rechners hinterlegt ist, wobei das Programm folgendes umfasst:

Mittel zum Eingeben und Verarbeiten von Daten über das optische System einer okularen optischen Linse, die einen Wert für die Abbe-Zahl einschließen;

Mittel zum Erzeugen einer Region des angenehmen Sehens, in der ein bestimmter Wert für die Sehschärfe sicher erhalten wird, aufgrund der Daten über das optische System; und

ein Anzeigemittel zum Anzeigen der erhaltenen Region des angenehmen Sehens.

**Revendications**

**1.** Procédé de visualisation d'un nombre d'Abbe d'un verre optique de lunettes, qui comprend :

l'entrée d'une valeur d'un nombre d'Abbe exprimant un degré d'aberration chromatique à chaque point sur un verre optique de lunettes ;

l'affichage d'une région de vision confortable en se basant sur les valeurs d'entrée, la région de vision confortable étant une région dans laquelle une valeur spécifique d'acuité visuelle est obtenue de façon sûre ; et

la visualisation de l'effet d'une différence dans le nombre d'Abbe du verre optique de lunettes en se basant sur une zone de la région de vision confortable.

**2.** Procédé selon la revendication 1, dans lequel la région de vision confortable est affichée comme une image.

**3.** Procédé selon les revendications 1 ou 2, dans lequel la région de vision confortable est une région délimitée par et contenue dans un cercle, une ellipse ou une courbe fermée.

**4.** Procédé selon l'une quelconque des revendications 1 à 3, dans lequel une pluralité de régions de vision confortable qui sont obtenues à partir de nombres d'Abbe d'une pluralité de verres optiques de lunettes en se basant sur différentes spécifications sont affichées sur un même écran de telle sorte que la pluralité de régions peuvent être comparées.

**5.** Procédé selon l'une quelconque des revendications 1 à 4, dans lequel la région de vision confortable est affichée d'une manière telle qu'un centre de la région est placé au niveau d'un centre optique du verre optique de lunettes sur un écran sur lequel est affichée une image d'une forme d'une monture de verres.

**6.** Procédé selon l'une quelconque des revendications 1 à 5, qui permet la simulation d'un changement dans la région de vision confortable en raison d'un changement d'au moins un du nombre d'Abbe, d'une valeur d'acuité visuelle, d'une puissance dioptrique sphérique, d'une puissance dioptrique cylindrique, d'un angle d'axe de cylindre, d'une puissance dioptrique supplémentaire et des valeurs INTERIEUR/EXTERIEUR et HAUT/BAS d'une disposition d'une forme de verre.

7. Procédé selon l'une quelconque des revendications 1 à 6, dans lequel une image de vision réelle correspondant à la région de vision confortable est créée en se basant sur le nombre d'Abbe utilisé pour obtenir la région de vision confortable et l'image de vision réelle et la région de vision confortable sont affichées sur un même écran d'une manière telle que l'image et la région peuvent être comparées.

8. Procédé selon l'une quelconque des revendications 1 à 7, dans lequel un anneau de Landolt ou un repère visuel de Snellen est utilisé pour l'image de vision réelle.

9. Procédé de visualisation d'un nombre d'Abbe d'un verre optique de lunettes, qui comprend :

la sélection arbitraire d'un point à l'intérieur d'une forme de verre d'un verre optique de lunettes et, en se basant sur les caractéristiques de prisme au niveau du point choisi, la création d'une région visuelle équivalente dans laquelle une valeur spécifique d'acuité visuelle est obtenue de façon sûre ;
la création d'une région visuelle équivalente d'un autre verre optique de lunettes selon un même procédé ; et
l'affichage des deux régions visuelles équivalentes sur un même écran d'une manière telle que les régions peuvent être comparées.

10. Procédé selon la revendication 9, dans lequel une image de vision réelle au point choisi est créée et l'image de vision réelle et la région visuelle équivalente sont affichées sur un même écran d'une manière telle que l'image et la région peuvent être comparées.

11. Appareil pour visualiser un nombre d'Abbe d'un verre optique de lunettes, qui comprend :

des moyens d'entrée pour entrer des données d'un système optique comprenant un nombre d'Abbe, une puissance dioptrique de verre et une valeur d'acuité visuelle et une forme de verre du verre optique de lunettes ;
des moyens de calcul pour dériver une région de vision confortable dans laquelle la valeur d'acuité visuelle peut être obtenue de façon sûre en se basant sur l'entrée de données via les moyens d'entrée ; et
des moyens d'affichage pour afficher la région de vision confortable obtenue par les moyens de calcul et la forme de verre sur un même écran d'une manière telle que la région et la forme de verre peuvent être comparées.

12. Appareil selon la revendication 11, dans lequel la région de vision confortable est délimitée par et contenue dans un cercle dont le centre est placé au niveau d'un centre optique du verre optique de lunettes et dont le rayon a une valeur h dans une plage suivante :

$$h \leq kv_e/|D|$$

où
k est une constante
$v_e$ est un nombre d'Abbe
D est une puissance dioptrique de verre.

13. Appareil selon les revendications 11 et 12, qui comprend :

un appareil pour mesurer un nombre d'Abbe qui est utilisé pour mesurer le nombre d'Abbe du verre optique de lunettes ;
un dispositif de mesure de verre pour mesurer une puissance dioptrique de verre du verre optique de lunettes ;
un traceur de monture pour obtenir une forme d'une monture de lunettes ;
des moyens d'entrée externes pour entrer des données obtenues par les mesures utilisant l'appareil pour mesurer un nombre d'Abbe, le dispositif de mesure de verre et le traceur de monture dans les moyens de calcul ; et

des moyens d'entrée manuels pour entrer les données souhaitées d'un système optique comprenant le nombre d'Abbe dans les moyens de calcul.

14. Support de mémoire lisible par ordinateur et mémorisant un programme pour exploiter un ordinateur, le programme comprenant :

des moyens pour entrer et traiter des données d'un système optique, comprenant une valeur d'un nombre d'Abbe, d'un verre optique de lunettes ;
des moyens pour créer une région de vision confortable dans laquelle une valeur spécifique d'acuité visuelle est obtenue de façon sûre en se basant sur les données d'un système optique ; et
des moyens d'affichage pour afficher la région de vision confortable obtenue.

# FIG.1

Chromatic Abberation Simulator

GET_IMAGE

abbe_meter_read
START

input data
Sph 3.00    Dx 0.0

Cyl 0.00    Dy 0.0

Ax 180

SET

CLEAR

previous abbe    copy    recent abbe
44.0    ⟸    31.0

E E E E
E E E E
E E E E
E E E E

O

A    72 B    C

EP 1 199 553 B1

# FIG.2

# FIG.3

# FIG.4

ABBE'S NUMBER MEASURING UNIT — 13

LENS METER — 14

FRAME TRACER — 15

11 { 13, 14, 15 }

10

FOR EXTERNAL INPUT

16

20

ABBE'S NUMBER SIMULATOR

FOR MANUAL INPUT

12 — ABBE'S NUMBER
LENS DIOPTRIC POWER
LENS SHAPE
LAYOUT IN LENS SHAPE
VISUAL ACUITY VALUE

30 OUTPUT MEANS

DISPLAY CONTROL UNIT — 31

DISPLAY UNIT — 32

EP 1 199 553 B1

# FIG.5

```
INPUTS
    (1) ABBE'S NUMBER
    (2) LENS DIOPTRIC POWER
    (3) LENS SHAPE
    (4) LAYOUT IN LENS SHAPE
    (5) VISUAL ACUITY VALUE
```

ABBE'S NUMBER SIMULATION

```
OUTPUT
    (1) COMFORTABLY VISIBLE
        AREA IN LENS
    (2) VISIBLE IMAGE
```

# FIG.6